# EUROPEAN PATENT SPECIFICATION

(11) **EP 2 995 085 B1**
(45) Date of publication and mention of the grant of the patent: **02.05.2018**
(21) Application number: 13747706.3
(22) Date of filing: 14.06.2013
(51) Int. Cl.: H04N 21/422, G06F 3/0338, G06F 3/0362, H01H 19/14

(54) **REMOTE CONTROLLER FOR ELECTRONIC APPLIANCES SUCH AS TELEVISION AND THE LIKE**
FERNSTEUERUNG FÜR ELEKTRONISCHE VORRICHTUNGEN WIE FERNSEHER UND DERGLEICHEN
TÉLÉCOMMANDE DESTINÉE À DES APPAREILS ÉLECTRONIQUES TELS QUE DES TÉLÉVISIONS ET AUTRES

(30) Priority: 06.05.2013 PH 22013000203 U
(43) Date of publication of application: 16.03.2016
(73) Proprietor: Olivar, Dante, Antipolo City (PH)
(72) Inventor: Olivar, Dante, Antipolo City (PH)
(74) Representative: Lapienis, Juozas
(86) International application number: PCT/PH2013/000015
(87) International publication number: WO 2014/182183

(56) References cited:
- WO-A1-03/030092
- WO-A2-03/090008
- CA-A1- 2 263 774
- US-A1- 2005 162 397

## Description

### FIELD OF THE INVENTION

This invention relates generally to remote control devices for operation of an electronic appliance such as television, video recorders/players and the like, but more particularly to a remote controller having rotary selector switch to change channels or to increase and decrease the volume of the television or video recorder/player.

### BACKGROUND OF THE INVENTION

Remote control units for televisions are used to control all operations of a television and video recorders/players or the like. The units are made so that they are universal and can be programmed for the majority of televisions available on the market today. The operation is by sending an infrared signal from the control unit to an infrared receiver on the television, video recorders/players or the like. Remote control are used to change channels, volume control, on/off control and many features that different televisions are equipped with today. These remote control units are usually equipped with push button selector switch for changing the channels or to adjust the volume of the television, video recorders/players or the like. The state of the art discloses the following solutions.

Document US 2005/162397 A1 discloses a remote control device having a general button unit including a keypad and a matrix circuit part for outputting a desired signal according to an operation of the keypad. A gear unit is provided that includes a rotary gear and a gear circuit part for outputting a desired signal according to a rotation operation of the gear. A control unit generates an electronic equipment control signal according to the signal outputted from the matrix circuit part and the gear circuit part. A transmission unit externally transmits the signal generated in the control unit. Therefore, the gear of the remote control device can conveniently be used to control electronic appliances.

Document CA 2263774 A1 discloses switches and joysticks that comprise user-moveable two position and multi position switches including simple on/off and variable switches such as dimmers. The switches operate on the principle of detecting the position of a user grippable switch arm, a portion of which bears on a pressure-sensitive pad. The pad is a deformable material which detects and localizes pressure against the pad, by transmitting into the pad matrix wave energy such as light, and detecting the intensity of same. As the pad is locally compressed, intensity of the wave energy increases in the region around the compression. The position of a switch arm may thus be detected, and the information transmitted to a central processing unit, for further processing.

Document WO 03/030092 A1 discloses an operating device for controlling user functions in electronic user equipment in interaction with a display screen, and/or for controlling a means of transport, e.g., a motor vehicle, a boat, a ship, an aircraft or the like, where the operating device has a control element having four tilting positions and central depression, with movement on rotation or sliding in at least two directions, where there is a means for force feedback, wherein the movement is actuated by an electromotor or step motor for initiating or simulating a "step feeling", and wherein the angular extent of the movement, or the slide extent of the movement, and speed of the movement are measured, and wherein the "step feeling" will be able to vary in frequency because of the extent of movement. The motor according to WO 03/030092 A1 is designed to perform operations selected from the group: controlling the number of steps, controlling the distance between steps, controlling the force a user needs to apply, braking or stopping movement of the control element, causing a back or return in movement, stimulating or oscillating (small reciprocating motions), detecting movement and direction of movement.

Document WO 03/090008 A2 discloses an operating device for the input of data and control of user functions in hand-held electronic apparatus with or without a screen and apparatus that are remotely connected to a screen or display means and for controlling functions in means of conveyance and transport and electronic equipment associated therewith. The operating device is centrally depressible and sideways tiltable, and its user-contact portion consists of a one-piece surface for both tilting and depression.

However, in many occasions especially when in dark places, the user or viewer of the television would have difficulty changing the channels or decrease/increase the volume thereof. Due to the uniform sizes of the channel control switches, volume control switch and other switches which are in the form of buttons, the user tends to push a wrong button, thus if the user wants to change channels, he would tend to push the volume control switch or other switches instead of the channel selector button.

### SUMMARY OF THE INVENTION

The invention is defined by the appended claims.

The primary object of this invention therefore is to provide a remote controller for televisions, video recorders/players having a circular channel and volume selector switch which is different from the other control switches of the remote control.
Another object of this invention is to provide a remote controller for televisions, video recorders/players wherein the user can easily determine the correct switch button when changing channels or adjust the volume of the televisions, video recorders/players.
Yet, an object of this invention is to provide a remote controller for televisions, video recorders/players that is very easy to manufacture using simple and ordinary equipment.
These and other objects and advantages will come to view and be understood upon a reading of the detailed description when taken in conjunction with the accompanying drawing hereof.

### BRIEF DESCRIPTION OF THE DRAWINGS

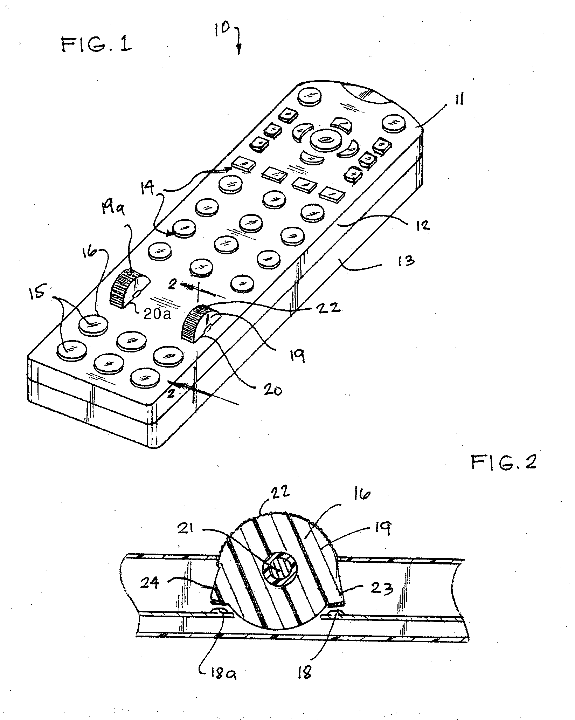

Figure 1 is a perspective view of the remote controller for televisions, video recorders/ players according to the present invention; and
Figure 2 is a partial sectional view when taken along line 2-2 of Figure 1.

### DETAILED DESCRIPTION

Referring now to the several views of the drawing, wherein like reference numeral designates same part throughout. Shown is a invention for a remote controller for televisions, video recorders/ players and the like generally designated as reference numeral 10.
Said remote controller 10 comprises an elongated generally flat housing 11 being defined by a pair of upper and lower shell 12 and 13. Said upper shell 12 is provided with a plurality of different kind of slots 14 adapted to receive different sizes of push buttons 15 intended for changing channels and for setting up different kinds of program activities, such as on/off button, mute button or for accessing the menu options.
Inside a typical remote control, a printed circuit board (not shown) is provided. Said circuit board is a thin piece of fiber glass having a thin copper wires etched onto its surface. Electronic parts such as chips, transistors, etc. are also assembled on said printed circuit boards and are connected to said copper wires.
The different push buttons 15 are made of thin rubbery material 16 and are each provided with black conductive disk at the bottom thereof. Said black 15 conductive disk are spacedly disposed from the contact member 18 located on said printed circuit board, such that when the push button 15 is pressed downwardly, the black conductive disk touches said contact member 18, thus is connected to the chip which senses the engagement of the particular button thereof. This step would produce a morse-code-line signal specific to that button. The transistors then amplify the signal and send them to a light emitting diode LED (not shown) which is usually located at one end of the housing 11, and translates said signal into infrared light that is received by the television/video recorder or player's sensor.
As best seen in the drawing, the novel feature of this invention is in the provision of a pair of individual circular channel and volume adjustment controls 19 and 19a made of rubbery material, and each traversing a pair of spaced apart rectangular slots 20and 20a on said housing 11, and respectively connected pivotally along at their centers with extending shafts 21 secured to said housing 11. Each of said channel and volume adjustment controls 19 and 19a are defined by a circular rubber member having a plurality of transverse ridges 22 along the periphery thereof and a pair of opposing forward lug 23 and rear lug 24 protruding outwardly from the periphery thereof. Said forward lug 23 and rear lug 24 are each provided with black conductive disks that communicate with their respective contact members 18 and 18a of said printed circuit board. By means of pushing the circular channel and volume adjustment control 19 and 19a, the forward lug 23 would push the front contact member 18 to change an existing channel to higher channels or increase volume of the television or video recorder/player and the like. The retraction of said channel and volume adjustment control 19 and 19a, the rear lug 24 would push the rear contact member 18a to adjust the program of the television to lower channels or decrease the volume thereof.
While this invention has been particularly shown and described above, it will be understood by those skilled in the art that various changes in form and details may be made therein without departing from the scope of the invention encompassed by the appended claims. For example, said circular rubber member may also be adapted to be used in all buttons of the remote control.

## Claims

1. A remote controller (10) for televisions, video recorders/players comprising a housing (11) having an upper shell (12) and lower shell (13), said upper shell (12) being provided with a plurality of different slots (14) adapted to receive different sizes of push buttons (15), and a printed circuit board with electronic parts disposed inside said housing (11), **characterized in that** at least one circular channel adjustment control, and a volume adjustment control (19), (19a) traversing respective slots (20), (20a) on said upper shell (12), each of said circular channel and volume adjustment control (19), (19a) being connected pivotally along the center of said circle to said housing (11) with extending shafts (21) secured to said housing (11), and each being provided with opposing forward lug (23) and rear lug (24) protruding outwardly from the circular periphery thereof and in communication with said printed circuit board, wherein the forward lug (23) and the rear lug (24) are each provided with black conductive disks which are pushed to their respective front contact member (18) and rear contact member (18a) of said printed circuit board by means of pushing the circular channel and volume adjustment controls (19), (19a).

2. A remote controller (10) for televisions, video recorders/players according to claim 1 wherein each of said circular channel adjustment control and volume adjustment control (19), (19a) being provided with plurality of transverse ridges (22) disposed at the periphery thereof.

3. A remote controller (10) for televisions, video recorders/players according to claim 1 wherein said circular channel adjustment control and volume adjustment control (19), (19a) being made of rubbery material.

## Patentansprüche

1. Fernsteuereinheit (10) für Fernsehgeräte, Videorekorder/Abspielgeräte, umfassend ein Gehäuse (11) mit einer Hüllschicht (12) und einer Unterschicht (13), wobei die genannte Hüllschicht (12) mit einer Mehrzahl von verschiedenen Schlitzen (14), um verschiedene Größen von Druckknöpfen (15) aufzunehmen, versehen ist, und eine Printplatte mit elektronischen Teilen, die innerhalb des genannten Gehäuses (11) angeordnet sind,
**dadurch gekennzeichnet, dass** mindestens eine von der Stelleinrichtung des runden Kanals und der Volumenstelleinrichtung (19), (19a) durch die jeweiligen Schlitze (20), (20a) an der genannten Hüllschicht (12) gelangt, wobei jede von der genannten Stelleinrichtung des runden Kanals und der Volumenstelleinrichtung (19), (19a) entlang der Mitte des genannten Kreises mit dem genannten Gehäuse (11) durch die erweiterten Wellen (21), die an dem genannten Gehäuse (11) befestigt sind, schwenkbar verbunden ist, und wobei jede von ihnen mit einer gegenüberliegenden vorderen Lasche (23) und einer hinteren Lasche (24), die von ihrem kreisförmigen Umfang nach außen vorsteht und in Verbindung mit der genannten Printplatten sind, wobei jede von der vorderen Lasche (23) und der hinteren Lasche (24) mit schwarzen leitenden Scheiben, die zu ihrem jeweiligen vorderen Kontaktelement (18) und hinteren Kontaktelement (18a) der genannten Printplatten durch Drücken der Stelleinrichtung des runden Kanals und der Volumenstelleinrichtung (19), (19a) gedrückt werden, versehen ist.

2. Fernsteuereinheit (10) für Fernsehgeräte, Videorekorder/Abspielgeräte nach Anspruch 1, wobei jede von der genannten Stelleinrichtung des runden Kanals und der Volumenstelleinrichtung (19), (19a) mit einer Mehrzahl von Querrippen (22), die an ihrem Umfang aufgestellt sind, versehen ist.

3. Fernsteuereinheit (10) für Fernsehgeräte, Videorekorder/Abspielgeräte nach Anspruch 1, wobei die genannten Stelleinrichtung des runden Kanals und Volumenstelleinrichtung (19), (19a) aus dem kautschukähnlichen Material hergestellt sind.

## Revendications

1. Télécommande (10) pour téléviseurs, vidéomagnétoscopes/lecteurs comprenant un boîtier (11) ayant une coque (12) supérieure et une coque (13) inférieure, ladite coque (12) supérieure étant pourvue d'une pluralité de fentes (14) différentes adapté pour recevoir des boutons (15) poussoirs de tailles différentes, et une carte de circuit imprimé avec des composants électroniques disposées à l'intérieur dudit boîtier (11), **caractérisée en ce qu'**au moins une commande circulaire de réglage de canal et une commande de réglage de volume (19), (19a) traversent des fentes (20), (20a) respectives sur ladite coque (12) supérieure, chacune desdites commande circulaire de réglage de canal et commande de réglage de volume (19), (19a) étant reliée de façon pivotante le long du centre dudit cercle audit boîtier (11) avec des arbres allongés (21) fixés audit boîtier (11), et chacune étant pourvue d'un ergot (23) avant et d'un ergot (24) arrière opposés faisant saillie vers l'extérieur à partir de la périphérie circulaire de celle-ci et en communication avec ladite carte de circuit imprimé, dont l'ergot (23) avant et l'ergot (24) arrière sont chacune munies de disques conducteurs noirs qui sont poussés vers leur élément (18) de contact avant et élément (18a) de contact arrière respectifs de ladite carte de circuit imprimé en poussant la commande circulaire de réglage de canal et la commande de réglage de volume (19), (19a).

2. Télécommande (10) pour téléviseurs, vidéomagnétoscopes/lecteurs selon la revendication 1, dans laquelle chacune desdites commande circulaire de réglage de canal et commande de réglage de volume (19), (19a) ést pourvue de plusieurs nervures (22) transversales disposées à la périphérie de celle-ci.

3. Télécommande (10) pour téléviseurs, vidéomagnétoscopes/lecteurs selon la revendication 1, dans laquelle desdites commande circulaire de réglage de canal et commande de réglage de volume (19), (19a) sont formées du matériau caoutchouteux.
